# EUROPEAN PATENT APPLICATION

(11) **EP 1 164 720 A2**
(43) Date of publication of application: **19.12.2001**
(21) Application number: 01112324.7
(22) Date of filing: 19.05.2001
(51) Int. Cl.: H04B 7/26

(54) **Point-to-point and point-multipoint burst radio transmission system**

(30) Priority: 16.06.2000 IT MI001361
(71) Applicant: Siemens Information and Communication Networks S.p.A., 20126 Milano (IT)
(72) Inventor: Licitra, Gaspare, 20064 Gorgonzola (IT); Lovino, Luigi, 20134 Milano (IT); Santacesaria, Claudio, 20139 Milano (IT)
(74) Representative: Giustini, Delio

(57) **Abstract**

Radio transmission system including a master station and one or more terminal stations. All the information transmitted are organized in bursts, some of which carry user data and some other transport control information. According to the invention:
- all the bursts transporting user data, or information bursts, have the same duration on the channel, said duration being labelled "time slot", and are suitable to carry an information field of elementary dimension.
- the bursts carrying the control information have the duration of one slot or of a slot fraction.

The transmission system according to the invention can therefore be defined "slot based" system since each burst contains all the information necessary for its correct interpretation and the duration of said bursts is fixed either the burst contains control information or the burst contains useful data.

The present invention enables to obtain considerable advantages in terms of synchronisation speed, robustness, efficiency and speed of the management protocols of the shared use of the channel (function of medium access control or MAC).

## Description

### Field of the Invention

The present invention finds particular application in radio transmission systems of the point-to-point or point-multipoint type with burst transmission.

In point-multipoint systems it is defined a specific station called master that communicates with some other stations called terminal stations. The classical terminology defines downstream channel, the channel going from the master station towards the terminals, and upstream channel the one running in the opposite direction. The two logic channels can occupy separate radio channels (frequency duplex systems) or the same radio channel time division employed (time duplex systems). For simplicity sake, reference shall be made to frequency duplex systems but the mention of this type of systems is not to be intended as limited to the same. In any case it shall be described later on how the invention applies also to time duplex systems.

In general, the systems of the point-to-point type do not completely enjoy the benefits of this invention even if presumptively the invention is applicable also to the same.

### Background Art

In radio transmissions, it is in general defined a frame structure defining how information is organized in sequences of information and control bits. These sequences and the meaning of the different bits inside the sequence, known to the transmitter and the receiver, enable the communication.

For the transmission of data packets there are two main approaches:
- Transmission of data packets of variable length
- Transmission of data packets having fixed length.

In the following, reference is made only to the case of data packets having fixed length, but also in this case, this has not to be intended as limited to the same, since packets having different length can for instance be segmented in packets having fixed length adding some filling bits to complete the last fixed length packet.

Concerning the transmission methods, there are two possibilities:
- continuous transmission (the transmitter can occupy the transmission channel for indefinitely long times);
- burst transmission (the communication from a transmitter to a receiver can occupy only a limited time slot inside the channel).

Burst transmissions are absolutely necessary for the upstream channel of point to multipoint time division systems and for time duplex systems, all the systems in which the same channel is used by different transmitters on different time instants. In frequency duplex point-multipoint systems with adaptive modulation and half duplex terminals (half duplex), a burst transmission is necessary also downstream to enable the (re-)synchronization on the downstream channel of half duplex terminals after an upstream transmission.

Due to their importance, this invention is limited to burst transmission systems and attains the object to optimize the transmission of data packets having fixed dimension in a burst system. The invention is described with reference to systems of the frequency duplex point-multipoint type but it is applicable also to time duplex systems both point-to-point and point-multipoint. In a point-multipoint system it is defined a basic station and many terminal stations connected through a communication downstream channel (from basic to terminals) and an upstream channel (from terminals to basis).

Several examples of frame structures for continuous or burst radio transmission of packets having fixed or variable size, are known in the literature. All these solutions, already known, share the presence of a frame, generally having duration ranging from half millisecond to some milliseconds. All the solutions known to the Applicant foresee that some sections of this frame transport control information and others transport useful data. In said solutions of the known type, the frame has the function to enable the synchronisation between the basic station and the terminals and the ordered transport of control information.

### Object and summary of the Invention

The present invention supersedes the traditional frame concept and relates to a radio transmission system in which all the transmissions occur inside bursts and there is no type of useful or control information transmitted outside the above mentioned bursts, as it happens, instead, in known transmission systems in which the single bursts are then allocated inside a frame structure including also information for the frame demultiplexing.

Therefore, the transmission system according to the invention can be defined "slot based" since each burst contains all the information necessary for its correct interpretation and the duration of said bursts is fixed, either the burst contains control information or the burst contains said useful data. Thus the slot concept has its origin, that is the concept of channel time slot inside which a burst is transmitted. The frame structure simply reduces to the slot structure. The slot duration is typically in the range of microseconds or tenths of microseconds and therefore shorter than the traditional frame.

The present invention enables to attain considerable advantages in terms of synchronisation speed, robustness, efficiency and speed of the protocols for the control of the shared use of the channel (function of MAC, Medium Access Control). Being the synchronisation and control information transmitted very often (with a frequency equal to the time slot) and at regular intervals, this information can be extremely condensed (thus reducing the overhead) and facilitate the use of fast synchronisation and control protocols.

One of the elements featuring this invention is that the slot has constant time irrespective of the fact that useful information or control information is transmitted, that a type of modulation is used rather than another one, or a code to correct errors is employed rather than another one. The sole exception to this rule is represented by control minibursts that are used to transmit only information useful to control the shared use of the channel; said minibursts having duration equal to a slot fraction are however juxtaposed in a number such to occupy a time equal to one slot.

Therefore, scope of the present invention is a transmission system implemented in compliance with what described in claim 1.

Additional advantageous characteristics of the present invention are described in the appended claims relevant to number of detail featuring elements. Each one of these elements, described here after and in the claims, involves some advantage on robustness, efficiency or flexibility of the transmission system. Even if the combined use of all these measures enables to obtain the maximum advantages, each of them can be used also as independent measure to obtain specific advantages.

### Brief description of figures

The invention, together with further objects and advantages thereof, may be understood with reference to the following description, taken in conjunction with the accompanying figures, in which:
- figure 1 shows the composition of a downlink and uplink frame structure in an FDD scenario;
- figure 2 shows the basic downstream burst;
- figure 3 shows the downstream information burst 16 QAM and 64 QAM;
- figure 4 shows the QPSK upstream information burst ;
- figure 5 shows the 16QAM upstream information burst ;
- figure 6 shows the QPSK control burst (both upstream and downstream) containing messages;
- figure 7 shows the messages contained in the control field of the burst in figure 6;
- figure 8 shows the uplink control miniburst (QPSK);
- figure 9 shows a control burst containing authorisations (downstream);
- figure 10 shows the application of the invention in time duplex scenarios.

### Detailed description of a preferred embodiment of the invention

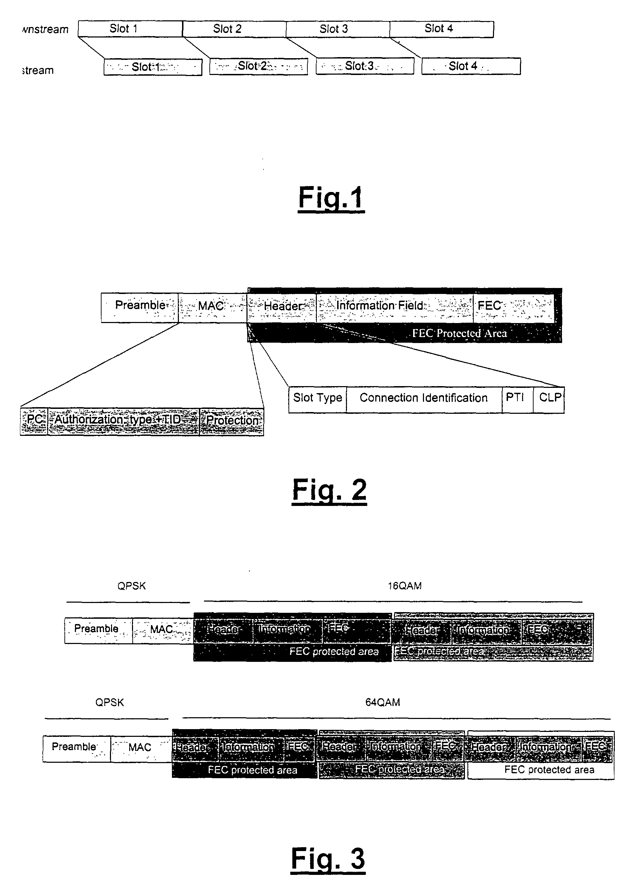

As said above, figure 1 shows in an FDD scenario, how the slots form the downlink and uplink frame structure. Featuring element of the invention is the use of slot boundaries downstream to synchronise the upstream slot (having equal duration). It must be noticed the watch time present between upstream burst pairs and not present between downstream ones.

The terminals can easily synchronise on the downstream channel and transmit the upstream slots in a well-defined time relation with downstream ones; during the initial recording the master station equalises the delays of all the terminals.

Downstream bursts can be of different types:
- information bursts QPSK (for useful information that is user data)
- information bursts 16QAM (for useful information that is user data)
- information bursts 64QAM (for useful information that is user data)
- control burst QPSK

Uplink burst can be of different types:
- information bursts QPSK (for useful information that is user data)
- information bursts 16QAM (for useful information that is user data)
- control miniburst QPSK
- control burst QPSK
- registration slots

Figure 2 shows the basic downstream burst. All the terminals receive and demodulate these bursts.

The burst consists of an information field having fixed length that transports user data and it is typically 48 byte long (optimised for ATM), of a preamble for the synchronisation of the physical layer, a MAC field containing information for the control of the access to the medium, a Header field containing information on the burst type and on the connection transmitted and a FEC field destined to an error correction code that protects Header and Information Fields.

The MAC field contains in turn a field (PC) destined to the fast power control information, an 'Authorisation' field including the type of authorisation and a terminal identification for the terminal invited to transmit in the next upstream slot.

The above mentioned terminal identification can in some cases (such as authorisations to contention access) assume the meaning of identification of a group of terminals.

A featuring element of the invention is the use of a power control information associated to the authorisation to transmission. The addressee terminal of the authorisation is also the addressee of the control information mentioned above.

A featuring element of the invention is the use of an authorisation (called also grant or permit) addressing the terminal and not the connection; the terminal will have a second level scheduler through which it will decide which connection to transmit.

The MAC field is protected by its own error detection and/or correction code (that is, protecting the sole MAC field). This choice, featuring the invention, offers the advantage to transmit the MAC field with a different modulation versus that of the information field.

The header field contains the identification of the slot type, the connection identification, and other information useful for the segmentation function of long packets.

Figure 3 shows the downstream 16QAM and 64QAM information slots containing, respectively 2 and 3 times, the Header, Information and FEC fields. The MAC field and the preamble are still transmitted with the QPSK modulation because these fields are intrinsically broadcast and must be received by all the terminals with sufficient reliability. The field dimensioning, shown in figure 3, enables to maintain a constant time slot, irrespective of the type of modulation. A subset of terminals decode the 16QAM slot in addition to the QPSK and a narrower subset decode also the 64QAM.

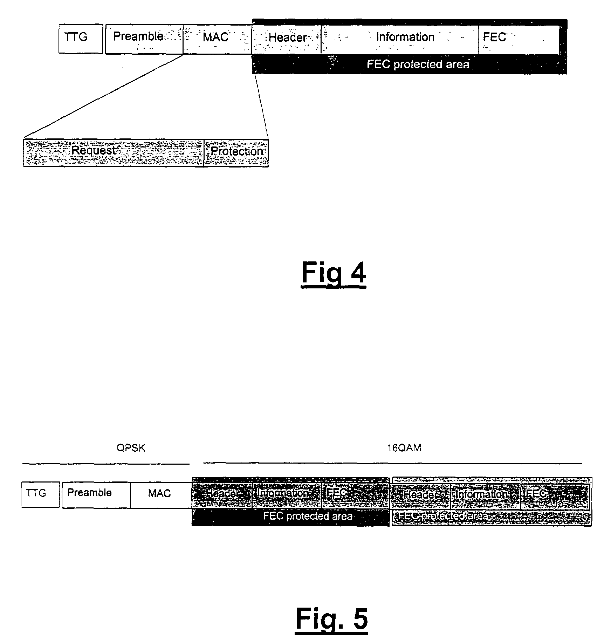

Figure 4 shows the upstream QPSK information burst that is the basic upstream burst. Featuring element of the invention is that the downstream and upstream time slots are the same. Only the fields differing from the downstream ones are highlighted. In particular, there is a TTG field (Terminal Transition Gap), which is a silence, interval between two bursts, necessary to enable the previous terminal to switch off the transmitter and the new one to switch it on, in addition to absorbing the non perfect equalisation of delays. The MAC field of the upstream contains a Request field with its protection.

Featuring element of the invention is the structure of this request carrying information on the status of the queues of the terminal transmitting the same. This information is binary coded, associating a logic state to the non-empty queue status (at least one elementary information unit to transmit) and the other logic status to the empty queue status.

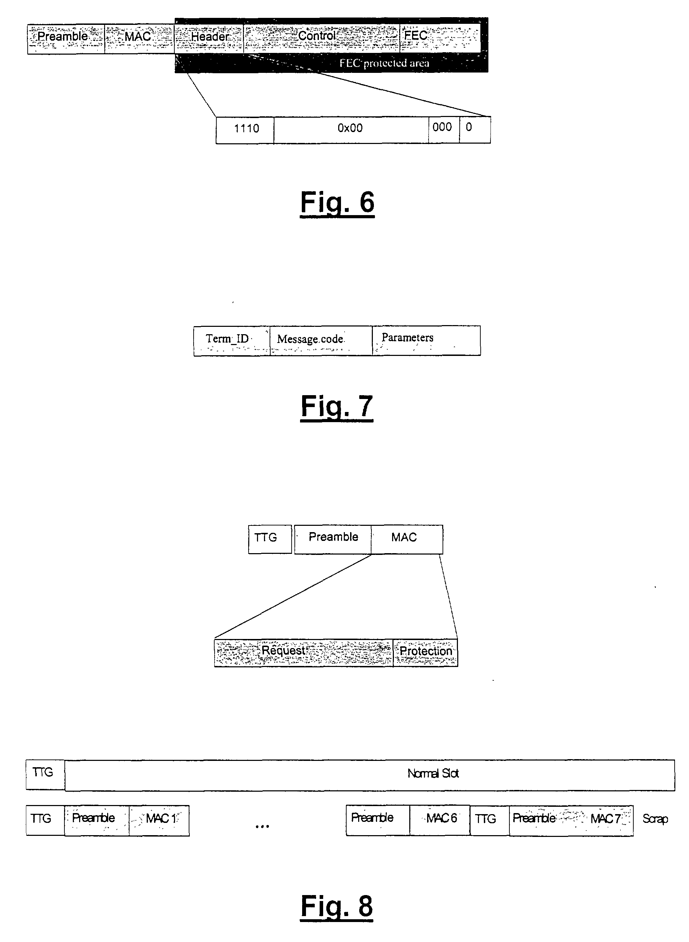

Figure 5 shows the 16QAM upstream information burst that contains twice the Header, Information and FEC fields while the MAC field and the preamble keep the QPSK modulation for robustness reasons. The field dimensioning, shown in figure 5, enables to maintain constant slot duration, irrespective of the modulation type.

Some slots are dedicated to the transmission of control information. Figure 6 shows the QPSK control burst (both upstream and downstream). The number and time positioning of these slots is not fixed, but it is controlled by the choices of a master station. This featuring element of the invention enables the maximum flexibility in terms of selection of the correct equilibrium between overhead and protocol speed. In fact, the master station can decide to send the control bursts at a higher frequency only when necessary, while freeing the channel to transmit useful information when protocols have nothing to transmit.

The structure of the control burst is similar to that of the QPSK information burst both for the upstream and for the downstream. The sole difference is that the header field has a fixed content identifying the control burst and the information field is replaced by a control field containing messages destined to the communication among microprocessors.

The messages contained in the control field are shown in figure 7 and have the following format: a terminal identification to which the message is addressed, the operating code of the message and message parameters. More messages (for the downstream of point-multipoint systems even with different destination terminals) can be assembled in the same control field.

Figure 8 shows the uplink control minibursts (QPSK). These are small size control bursts used to transmit only the information of the MAC'field without associating an information or control field. A definite number of minibursts is always transmitted in contiguous position (except for the watch time between a miniburst and the next one) up to occupying a channel time equal to a slot (possible padding is left at the end as channel silence).

### Registration window

The terminals, at the first transmission, do not know the time relation between downstream bursts and upstream bursts. This time relation depends on the distance of the terminal itself from the basic station and is equalised by the master station on the basis of a delay equalisation procedure. This procedure requires the transmission of a burst that does not meet the slot alignment of the system. For this reason the master station has the faculty to open window of several silence time slots on the channel in order to enable this operation.

### Group of authorisations for half duplex terminals

Half-duplex terminals, actually behaving as TDD terminals, have the obvious restraint that the sum of the upstream and downstream bands cannot exceed the band of the single monodirectional channel; moreover they pay a round trip time any time they switch from reception to transmission. There is no way to avoid these restraints; this invention defines an authorisation transfer mechanism optimised for these terminals, mechanism that can coexist with the quick mechanism described above in which the authorisations are inserted one per burst. The mechanism optimised for half duplex terminals includes the possibility, featuring the invention, to transmit a transport authorisations burst in a slot defined by the master station which is essentially a control burst containing a given number of authorisations in place of the control information.

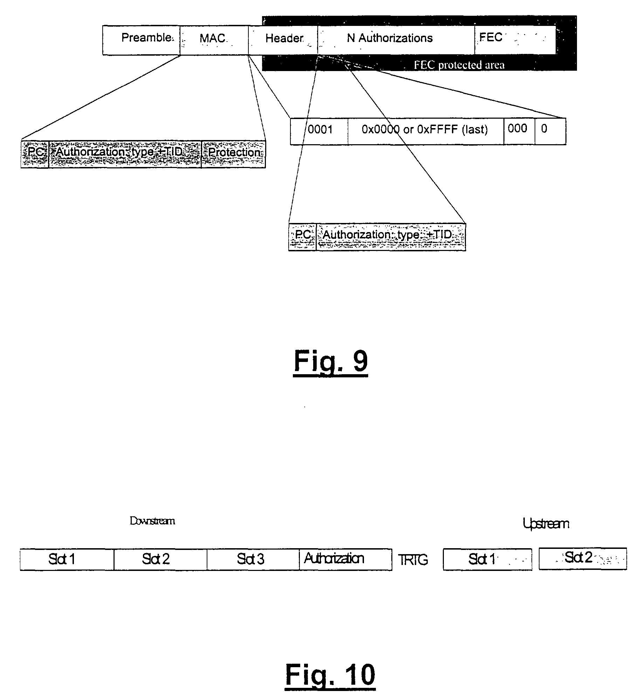

Figure 9 shows a burst containing authorisations; an unlimited number of said bursts containing authorisations can be transmitted in adjacent slots; the last one can be identified thanks to a different value in an appropriate field and enables also the starting of the transmissions by the authorised terminals.

In this way, two modes are created that can coexist to authorise a specific terminal to transmit in a specific slot of the upstream channel. The master station has the responsibility to avoid the authorisation of two different terminals for the same slot.

The advantage of the authorisation transport mode one per slot is the protocol speed of FDD terminals while the advantage of authorisations transported in groups is the flexibility that enables the half duplex terminals to save switching time from reception to transmission and vice versa. When receiving more authorisations at a time, the half duplex terminal can abandon the reception mode to enter the transmission mode (paying a round trip time) and then transmit some slots in order that the round trip time is paid only once for all the transmitted slots, instead of a round trip for each slot.

Figure 10 shows the application of the invention in time duplex scenarios. The use of the assembled authorisation transport, the frame structure proposed in this invention can be applied also to time duplex systems. In this case the authorisation transport mechanism inside the slots is ineffective and is not used (the corresponding fields remain in the burst, but are unused).

In time duplex systems the downstream and upstream portion alternate inside the same channel rather than occupying radio channels on separate frequencies.

The bursts have the same structure as previously described. The terminals can easily synchronise on the downstream channel and time slots for the transmission of upstream slots are defined in relation to timing windows of the slots in the downstream channel. Also in this case an initial equalisation procedure of delays is employed. The terminal receiving the first authorisation of the authorisation slot starts transmitting after the reception of said authorisation slot adding an equalisation delay (that is communicated to the same by the master station during the registration procedure).

Therefore, though some particular embodiments of the present invention have been shown and described, it should be understood that the present invention is not limited thereto since other embodiments may be made by those skilled in the art without departing from the scope thereof. It is this contemplated that the present invention encompasses any and all such embodiments covered by the following claims.

## Claims

1. Radio transmission system including a master station and one or more terminal stations, **characterised in that** all the information transmitted are organised in bursts, that can be separately demodulated, some of which carry user data and others carry control information, characterised also **in that**:
• all the bursts transporting user data, or information bursts, have, on the channel, the same time duration, or 'time slot', and are suitable to carry an information field having elementary dimension.
• the bursts carrying control information have one slot duration, hereinafter defined control bursts, or a duration of a fraction of slot, hereinafter defined control minibursts.

2. The system of claim 1, characterised also in that when the bursts that carry control information have duration equal to a slot fraction, more minibursts are transmitted in contiguous position in a number suitable to occupy a complete slot.

3. The system of claim 2 **characterised in that** said bursts or groups of minibursts are transmitted within "time slots" according to a sequence decided time by time by an appropriate function of the master station, thus making the frame structure to match with the time slot structure, and without requesting in advance any periodicity longer than one time slot, nor requesting the addition of any type of additional information transmitted outside said bursts.

4. The system of claim 3 applied to a frequency duplex bi-directional scenario in which an upstream direction and a downstream direction are identified and **characterised in that** the time position of upstream bursts is tied to the time position of downstream bursts.

5. The system of claim 3 in which each one of said information bursts includes a preamble for the synchronisation of the physical layer, an information field of fixed length and accessory information.

6. The system of claim 3 in which each one of said control bursts includes a preamble for the synchronisation of the physical layer, a control field and accessory information.

7. The system of claim 3 in each one of said control minibursts includes a preamble for the synchronisation of the physical layer and accessory information

8. The system of claim 5 in which the information field consists of 48 bytes then optimised for the transport of the ATM payload

9. The system of claims 5 and 6 in which said accessory information includes a 'header' field for the identification of the burst and connection type, a 'MAC' field for the control of the shared access to the medium of the TDMA system and a 'FEC' field for the correction of transmission errors.

10. The system of claim 9 in which the 'header', information and FEC fields can appear more times inside the burst, using multilevel modulations and/or changing the dimension of the FEC field, always maintaining the same time duration of the burst (fixed slot).

11. The system of claim 7 in which said accessory information include a 'MAC' field for the control of the shared access to the medium with the means of the TDMA system and a 'FEC' field for the detection and/or correction of transmission errors.

12. The system of claim 9 in which the header field includes an identification of the slot type.

13. The system of claim 9 in which the header field includes a connection identifier.

14. The system of claim 9 in which the header field includes some bits containing control information for the segmentation and insertion in the bursts of packets having size higher than the single burst.

15. The system of claim 9 in which the MAC field contains an 'authorisation' that is an enabling information to transmission in a given time slot, in the opposite direction of an arbitrated TDMA system.

16. The system of claim 9 in which the MAC field contains some bits with information relevant to the remote control of the transmitter power; system characterised also in that said information relevant to the remote power control are associated to the authorisation (and therefore recognised and interpreted by the terminal receiving, simultaneously in the same MAC field, the authorisation to transmit).

17. The system of claims 9 and 11 in which the MAC field contains a 'request' that is an information relevant to the bandwidth needs or to the status of the queues of the part emitting said request.

18. The system of claim 15 in which said 'authorisation' consists of an identification of the transmitter authorised to transmit, irrespective of the specific connection that said transmitter will transmit.

19. The system of claim 17 in which said 'request' consists of a queue status coded in an appropriate way.

20. The system of claim 19 in which the coding of the status of the queues is binary with one of the two binary values associated to the status of the non-empty queue and the other value associated to the status of empty queue.

21. The system of claim 20 in which said binary coding can appear more times with the purpose to handle different queues having different priorities.

22. The system of claim 6 in which the control field includes configuration and control commands destined to the microprocessor of the remote unit or to the microprocessors of remote units.

23. The system of claim 6 in which in particular control bursts, the control field includes groups of authorisations transmitted altogether in order to optimise the behaviour of half duplex terminals in frequency duplex scenarios and for time duplex scenarios.

24. The system of claim 23, in which said control bursts including groups of authorisations can be transmitted in groups, **characterised in that** the last slot of the group can be identified thanks to a different value entered in a particular slot field.

25. The system of all the previous claims when applied to radio point-multipoint bi-directional access equipment with downstream TDM or TDMA and upstream TDMA, whether frequency duplex or time duplex.

26. The system of claim 6 **characterised in that** said control burst can be transmitted during the registration phase from a terminal to enable the delay equalisation and **characterised in that** the transmission of said burst during the registration phase is preceded by some null authorisations in order to create a silence window on the channel to enable the master station to measure the delay.

27. The system of claim 9 in which the MAC field includes an error detection and/or correction code independent from that of the information field.

28. The system of claim 3 applied to a frequency duplex bi-directional scenario in which an upstream direction and a downstream direction are identified, **characterised in that** the duration of the upstream and downstream slots are identical.

29. The system of claim 3 applied to a time duplex bi-directional scenario **characterised in that** the duration of the slots in both the directions is identical and time positions of the slots in a direction is slaved to the position of the slots in the opposite direction.

30. The system of claims 15 and 23 in which said transport methods of authorisations coexist in the same system and said master station can use them in a flexible way to optimise the transport to terminals of different types, undertaking the responsibility not to assign twice the same slot to two different terminals.
